# EUROPEAN PATENT APPLICATION

(11) **EP 4 509 621 A1**
(43) Date of publication of application: **19.02.2025**
(21) Application number: 24158882.1
(22) Date of filing: 21.02.2024
(51) Int. Cl.: C22B 26/12, C22B 5/12, B09B 3/40, C22B 7/00, C22B 23/02, C22B 1/02, H01M 10/54, B09B 101/16

(54) **RECYCLING METHOD FOR WASTE LITHIUM ION SECONDARY BATTERIES AND ELECTRODE RAW MATERIALS OBTAINED THEREFROM**

(30) Priority: 17.08.2023 KR 20230107681; 15.12.2023 KR 20230183276
(71) Applicant: AK tree Co., Ltd, Seoul 06164 (KR); Libus987 Inc, Houston, TX 77036 (US)
(72) Inventor: AHN, Hyo Soo, 44784 Nam-gu, Ulsan (KR); KIM, Eun Jung, 22009 Yeonsu-gu, Incheon (KR)
(74) Representative: Beck & Rössig European Patent Attorneys

(57) **Abstract**

An object of the invention is to provide a method for economically and eco-friendly recovering an electrode raw material for a positive electrode and a negative electrode from a waste lithium ion secondary battery, which is formed by the pyrolysis of a waste lithium ion secondary battery, and an electrode raw material for a positive electrode and a negative electrode, obtained therefrom. To accomplish the object, a recycling method of a waste lithium ion secondary battery according to the invention may include (a) loading a waste lithium ion secondary battery into a pyrolysis furnace, (b) increasing the internal temperature of the pyrolysis furnace to induce self-heating of the waste lithium ion secondary battery, (c) maintaining a self-heating reaction of the waste lithium ion secondary battery, (d) discharging a first powder formed after completing the self-heating reaction of the waste lithium ion secondary battery, and (e) injecting the first powder into water, dissolving a lithium component included in the first powder, and separating and recovering a lithium aqueous solution, a powder settled in the lithium aqueous solution, and a floating material on the surface of the lithium aqueous solution, separately.

## Description

### BACKGROUND OF THE INVENTION

### 1. Field of the Invention

The present invention relates to a recycling method for a waste lithium ion battery and an electrode raw material obtained therefrom, and particularly, to a recycling method for eco-friendly and economically recovering an electrode raw material through the pyrolysis of a waste lithium ion secondary battery and a separation process using water, and an electrode raw material obtained therefrom.

### 2. Description of the Related Art

According to the shift of the automotive industry from internal combustion engine cars to electrical vehicles, Europe and China, which are the growth axes of global electric vehicles and secondary batteries, are seeking to expand the supply of electric vehicles and to secure competitiveness through regulations on carbon dioxide and a green vehicle roadmap. Accordingly, the global market of electric vehicles is expected to grow rapidly.

Generally, the batteries of electric vehicles are discarded after 5-10 years of use, and the waste battery market is also expected to become serious. The generation amount of global waste batteries of electric vehicles is predicted to about 1.6 million tons by 2030, and in various countries, mainly in Europe, massive investment on the development of a process for recovering valuable metals from the waste batteries is being made.

In the waste battery recycling industry, different from reuse, valuable metals are recovered from waste batteries and reused as raw materials, and it is possible to solve environmental issues and stably secure valuable raw materials simultaneously.

The waste battery recycling is generally conducted by extracting valuable metals through discharging, disassembling and pulverizing, and then, a subsequent wet smelting process or dry smelting process. The dry smelting process which is appropriate for a large-capacity processing and has a high recovery efficiency receives attention.

According to the dry smelting process, a powder obtained by the pulverization is heated at a high temperature to fire and remove organic compounds and polymer components included in the pulverized powder, the resultant is pulverized again, and valuable metals are extracted by a wet method using a strong acid.

The dry smelting process requires a lot of time and an equipment for discharging and pulverizing, and subsequent complicated processes to become less economical, heating at a high temperature brings about a large amount of impurities in the discharged resultant to reduce the extraction ratio of valuable components obtained from a whole powder, and the resultant existing as a bulk state inevitably requires pulverization and the use of a strong acid once again for the extraction of valuable components, thereby arising environmental issues.

### SUMMARY OF THE INVENTION

An object of the invention is to provide a method for economically and eco-friendly recovering an electrode raw material for a positive electrode and a negative electrode from a waste lithium ion secondary battery, which is formed by the pyrolysis of a waste lithium ion secondary battery, and an electrode raw material for a positive electrode and a negative electrode, obtained therefrom.

To accomplish the object, a recycling method of a waste lithium ion secondary battery according to the invention may include (a) loading a waste lithium ion secondary battery into a pyrolysis furnace, (b) increasing the internal temperature of the pyrolysis furnace to induce self-heating of the waste lithium ion secondary battery, (c) maintaining a self-heating reaction of the waste lithium ion secondary battery, (d) discharging a first powder formed after completing the self-heating reaction of the waste lithium ion secondary battery, and (e) injecting the first powder into water, dissolving a lithium component included in the first powder, and separating and recovering a lithium aqueous solution, a powder settled in the lithium aqueous solution, and a floating material on the surface of the lithium aqueous solution, separately.

In addition, in the recycling method of a waste lithium ion secondary battery according to an embodiment of the invention, a temperature of the water for injecting the first powder in step (e) may be 30°C or less.

In addition, in the recycling method of a waste lithium ion secondary battery according to an embodiment of the invention, microbubbles having 20 microns or less may be injected into a slurry formed after injecting the first powder into the water in step (e).

In addition, the recycling method of a waste lithium ion secondary battery according to an embodiment of the invention may further include evaporating water in the lithium aqueous solution to recover lithium carbonate.

In addition, the recycling method of a waste lithium ion secondary battery according to an embodiment of the invention may further include injecting an alkali into the lithium aqueous solution to increase pH, and to precipitate and recover the lithium component as lithium hydroxide.

In addition, the recycling method of a waste lithium ion secondary battery according to an embodiment of the invention may further include injecting the settled powder into an acidic aqueous solution to recover a metal aqueous solution in which a metal component included in the settled powder is dissolved.

In addition, in the recycling method of a waste lithium ion secondary battery according to an embodiment of the invention, the settled powder may include metallic nickel and cobalt.

In addition, in the recycling method of a waste lithium ion secondary battery according to an embodiment of the invention, the settled powder may include metallic iron.

In addition, in the recycling method of a waste lithium ion secondary battery according to an embodiment of the invention, water may be injected together into the pyrolysis furnace in step (a).

In addition, in the recycling method of a waste lithium ion secondary battery according to an embodiment of the invention, an injection amount of the water in step (a) may be in a range of 1-10 parts by mass on the basis of 100 parts by mass of the weight of a positive electrode material included in the waste lithium ion secondary battery charged in the pyrolysis furnace.

In addition, in the recycling method of a waste lithium ion secondary battery according to an embodiment of the invention, the waste lithium ion secondary battery in step (a) may be in an undischarged state.

In addition, in the recycling method of a waste lithium ion secondary battery according to an embodiment of the invention, the waste lithium ion secondary battery in step (a) may be in an unpulverized state.

In addition, in the recycling method of a waste lithium ion secondary battery according to an embodiment of the invention, the waste lithium ion secondary battery in step (a) may include a waste lithium ion secondary battery disposed as a defect in the manufacturing process of a lithium ion secondary battery.

In addition, in the recycling method of a waste lithium ion secondary battery according to an embodiment of the invention, the waste lithium ion secondary battery in step (a) may be disassembled and pulverized and may include the waste lithium ion secondary battery in a powder state.

In addition, in the recycling method of a waste lithium ion secondary battery according to an embodiment of the invention, the internal temperature in step (b) may be 400°C or less.

In addition, in the recycling method of a waste lithium ion secondary battery according to an embodiment of the invention, the pyrolysis furnace may be unheated in step (c).

In addition, in the recycling method of a waste lithium ion secondary battery according to an embodiment of the invention, step (c) may be continued for 10-24 hours.

In addition, in the recycling method of a waste lithium ion secondary battery according to an embodiment of the invention, step (c) may be carried out in an inert gas atmosphere.

According to the invention, there may be provided a metal powder recovered from a waste lithium ion secondary battery, as the settled powder recovered by the above-described recycling method of a waste lithium ion secondary battery, including metallic Ni and Co, and being magnetic.

A saturation magnetization value of the metal powder according to an embodiment of the invention may be 15 emu/g or more.

An average particle size of the metal powder according to an embodiment of the invention, measured through a particle size analyzer using laser diffraction may be 20 µm or less, and a standard deviation in particle size distribution may be 10 µm or less.

In the metal powder according to an embodiment of the invention, if the molar ratio of the metallic Ni to the metallic Co in the metal powder (M_{Ni}/M_{Co}, M_{Ni} and M_{Co} are a mole fraction of the metallic Ni and a mole fraction of the metallic Co in a metal reduction powder, respectively) is a first molar ratio (M1), and if the molar ratio of Ni to Co in a positive electrode material of the waste lithium ion secondary battery before pyrolysis (m_{Ni}/m_{Co}, m_{Ni} and m_{Co} are a mole fraction of Ni and a mole fraction of Co in a positive electrode material, respectively) is a second molar ratio (M2), a difference between the first molar ratio and the second molar ratio may be 10% or less of the second molar ratio.

The metal powder according to an embodiment of the invention may not include a metal ion other than metal ions of Li, Ni, Co, Fe and Al, and may not include anions of F⁻ and Cl⁻.

According to the invention, there may be provided an iron powder recovered from a waste lithium ion secondary battery, as the settled powder recovered from the above-described recycling method of a waste lithium ion secondary battery, and including metallic iron or iron oxide.

According to the invention, there may be provided a carbon powder recovered from a waste lithium ion secondary battery, as the floating material recovered from the above-described recycling method of a waste lithium ion secondary battery, and including graphite, or graphite and silica.

An average particle size of the carbon powder according to an embodiment of the invention, measured through a particle size analyzer using laser diffraction may be 20 µm or less, and a standard deviation in particle size distribution may be 10 µm or less.

According to the invention, there may be provided a waste lithium ion secondary battery recycled powder comprising lithium carbonate, metallic nickel and metallic cobalt as the first powder recovered through the recycling method of a waste lithium ion secondary battery.

### ADVANTAGEOUS EFFECTS

The recycling method of a waste lithium ion secondary battery according to the invention is economical and eco-friendly simultaneously, and the recycling efficiency of the waste lithium ion secondary battery may be increased, and environmental problems produced during recycling may be solved.

In addition, a positive electrode material or a negative electrode material which is economically feasible, may be prepared from a raw material for a positive electrode or negative electrode from valuable element components obtained according to the invention.

### BRIEF DESCRIPTION OF THE DRAWINGS

Fig. 1 is a flowchart explaining a recycling method of a waste lithium ion secondary battery according to an embodiment of the invention;
Fig. 2 is a schematic diagram explaining a process for obtaining lithium carbonate in a recycling method of a waste lithium ion secondary battery according to an embodiment of the invention;
Fig. 3 is a graph showing X-ray diffraction analysis results on lithium carbonate obtained through a recycling method of a waste lithium ion secondary battery according to an embodiment of the invention;
Fig. 4 is a graph showing particle size analysis results using laser diffraction on a settled powder obtained through a recycling method of a waste lithium ion secondary battery according to an embodiment of the invention;
Fig. 5 is a graph on measurement results of a saturation magnetization value on a powder obtained immediately after pyrolysis and a settled powder recovered after treatment in water in a recycling method of a waste lithium ion secondary battery according to an embodiment of the invention;
Fig. 6 shows a transmission electron microscopic image and diffraction pattern analysis results of a settled powder obtained through a recycling method of a waste lithium ion secondary battery according to an embodiment of the invention; and
Fig. 7 shows a transmission electron microscopic image and diffraction pattern analysis results of a settled powder obtained through a recycling method of a waste lithium ion secondary battery according to an embodiment of the invention.

### DETAILED DESCRIPTION OF THE EXEMPLARY EMBODIMENTS

Hereinafter, embodiments of the present application will be explained in detail so that a person having ordinary knowledge in the technical field to which the present application belongs can easily perform referring to attached drawings. However, the present application can be accomplished in various different types and is not limited to the embodiments explained herein.

Throughout the description, when a portion is said to 'include' any component, it means that the portion may further include other components rather than excluding the other components unless otherwise stated.

The terms "about," "substantially," and the like used herein are used in a sense that is close to a numerical value presented with a manufacturing and material tolerance specific to a stated meaning, and is used to prevent an unscrupulous person from abusing a disclosure in which an exact or absolute value is stated in order to facilitate the understanding of the invention. In addition, the term "a step ~ing," or "a step of ~," as used throughout the specification, does not mean "a step for ~."

Throughout the specification, the term "a combination thereof' included in an expression of the Markush form means one or more mixtures or combinations selected from the group consisting of components described in the expression of the Markush form, and means to include one or more selected from the group consisting of the components.

Throughout the specification, the term "A and/or B" means "A or B, or A and B."
A recycling method of a waste lithium ion secondary battery provided according to the invention includes (a) loading a waste lithium ion secondary battery into a pyrolysis furnace, (b) increasing the internal temperature of the pyrolysis furnace to induce self-heating of the waste lithium ion secondary battery, (c) maintaining a self-heating reaction of the waste lithium ion secondary battery, (d) discharging a first powder formed after completing the self-heating reaction of the waste lithium ion secondary battery, and (e) injecting the first powder into water, dissolving a lithium component included in the first powder, and separating and recovering a lithium aqueous solution, a powder settled in the lithium aqueous solution, and a floating material on the surface of the lithium aqueous solution, separately.

In the recycling method of a waste lithium ion secondary battery according to the invention, a battery is heated at a relatively low temperature to induce pyrolysis through self-heating by a positive electrode material, a binder, an electrolyte, or the like, included in the battery. Particularly, through stirring during injecting the waste lithium ion secondary battery into the pyrolysis furnace and increasing the internal temperature, a uniform reaction may be induced.

Meanwhile, a black mass which is a powder formed by disassembling and pulverizing a waste lithium ion secondary battery may also undergo self-heating by a positive electrode material, a binder, an electrolyte, or the like in the battery, and may induce a reaction through heating at a low temperature. In this case, the black mass may preferably be a black mass unheated during the treatment process of a waste lithium ion battery.

For a smooth self-heating reaction, the waste lithium ion secondary battery may be injected into the pyrolysis furnace in an undischarged state, and then, the temperature may be increased. The undischarged waste lithium ion secondary battery has a high energy state, and self-heating may easily occur by heating at a low temperature to accomplish pyrolysis. Particularly, since discharge treatment is not required, different from the conventional pyrolysis method, an equipment for discharging and a process for discharging are not required, and process cost may be significantly saved.

In addition, the waste lithium ion secondary battery injected in the recycling method of a waste lithium ion secondary battery according to the invention may be in an unpulverized state. In the conventional recycling method, a waste lithium ion secondary battery is heated to a high temperature after pulverization, but in the recycling method according to the invention, a battery is injected into a pyrolysis furnace in an unpulverized state. After completing the self-heating reaction, a positive electrode material, a negative electrode material, an electrolyte, or the like in the waste lithium ion secondary battery may be decomposed into a powder state, but the case or current collector of the battery may maintain its shape. Through this, after the self-heating at a low temperature, a pulverized positive electrode material, a negative electrode material, or the like may be easily separated from the case or current collector, which maintains the shape. Since an equipment and a process for pulverization are not required, the reduction of a process cost may be achieved.

Meanwhile, the waste lithium ion secondary battery injected in the recycling method of a waste lithium ion secondary battery according to the invention may be a black mass which is a powder formed by disassembling and pulverizing the waste lithium ion secondary battery. The black mass may also undergo self-heating by a positive electrode material, a binder, an electrolyte, or the like in the battery, and may induce a reaction through heating at a low temperature. In this case, the black mass may preferably be a black mass unheated during the treatment process of a waste lithium ion battery.

Meanwhile, the waste lithium ion secondary battery injected in the recycling method of a waste lithium ion secondary battery according to the invention may include a waste lithium ion secondary battery disposed as a defect during the manufacturing process of a secondary battery. The manufacturing process of a secondary battery may be classified into a plating process, an assembly process, a formation process or the like, and a waste lithium ion secondary battery as an intermediate waste, including an electrode plate on which a positive electrode material is coated in each process, may be recycled through the recycling method of a waste lithium ion secondary battery according to the invention.

In the conventional pyrolysis process at a high temperature, the whole including a case, a current collector, or the like as well as a positive electrode material and a negative electrode material, included in a waste lithium ion battery may form a bulk. Accordingly, in order to separate valuable components from the bulk, a pulverizing process on the bulk is required after the heating process as well as before the heating process, and a large quantity of impurities may be included. On the contrary, by the recycling method according to the invention, only valuable element components included in the positive electrode material or the negative electrode material may be easily pulverized and separated through the self-heating process.

In addition, in the recycling method according to the invention, pyrolysis is performed through the self-heating by the material in the waste lithium ion secondary battery, and compared to the conventional recycling method, the increase of the temperature is not required, and energy cost may be saved.

After completing the self-heating, metal elements such as nickel, cobalt, manganese, aluminum, and iron, which may be included in the positive electrode material of the waste lithium ion secondary battery may be included in a metal or oxide type in the first powder recovered. Particularly, nickel, cobalt, iron, or the like may be partially reduced into a metallic nickel, cobalt, iron, or the like by a thermal carbon reduction reaction through a carbon component like a separator and a negative electrode material, included in the waste lithium ion secondary battery, and may be included in the first powder. Meanwhile, lithium in a positive electrode material and an electrolyte may be transformed into lithium carbonate (Li₂CO₃) during the self-heating reaction, a negative electrode material may be partially decomposed, volatilized and removed, and the remainder may remain in a graphite or silica state in
the first powder.

If the first powder in which various valuable components remain is injected into pure water, lithium carbonate included is first dissolved in water to form a lithium aqueous solution. In addition, nickel, cobalt, manganese, aluminum, iron, or the like, included in the first powder in a metal or oxide state is settled on the bottom. Also, graphite and silica, which are constituent components of the negative electrode material are materials having a low density and are floating on the surface of the water.

Accordingly, in step (e), the valuable element component may be recovered from the waste lithium ion secondary battery as the lithium aqueous solution, the settled powder, and the floating material, respectively. Lithium may be recovered from the lithium aqueous solution, nickel, cobalt, manganese, aluminum or iron, which is the raw material of the positive electrode material may be recovered from the settled powder. In addition, graphite and/or silica, which are materials of a negative electrode material, may be recovered from the floating material on the surface of the water.

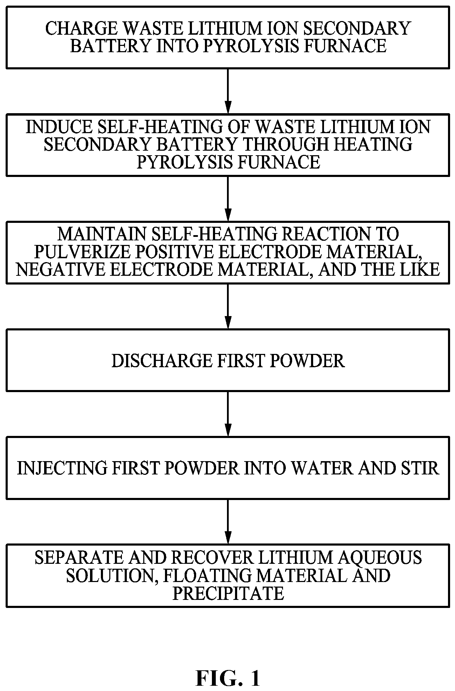

The recycling method of a waste lithium ion secondary battery according to the invention is shown in the flowchart of Fig. 1.

Meanwhile, it is advantageous for the lithium aqueous solution if the temperature of the water to which the first powder is injected is low, because the solubility of lithium carbonate increases in water at a low temperature. Accordingly, in the recycling method of a waste lithium ion secondary battery according to the invention, the temperature of water to which the first powder is injected is preferably, 30°C or less, more preferably, 25°C or less, even more preferably, 10°C or less. It is advantageous if the temperature of the water is low, but considering the process cost, it is advantageous to control the temperature to an appropriate level or less.

In addition, for effective and rapid dissolution of lithium and for effective separation of a floating material and a settled powder, microbubbles of 20 microns or less may be supplied to a slurry formed by injecting the first powder into the water. Through the microbubbles supplied, the flow of the slurry may occur in the slurry, the rapid dissolution of lithium carbonate may be induced, and effective separation into a settled powder and a floating material may be assisted. The size of the microbubbles is preferably 20 microns or less, because with a greater size, the microbubbles may rise to the surface of the slurry, and it is difficult to obtain the effects of microbubbles.

Meanwhile, the slurry formed after injecting the first powder into the water may be effectively separated into the lithium aqueous solution in which lithium carbonate is dissolved, the floating material and the settled powder through stirring or treatment with ultrasonic waves.

In order to recover lithium from the lithium aqueous solution, all the water included in the lithium aqueous solution may be evaporated to recover lithium carbonate (Li₂CO₃). Lithium carbonate included in the first powder may be dissolved in water, a lithium aqueous solution may be separated, and then, water may be removed again to recover pure lithium carbonate.

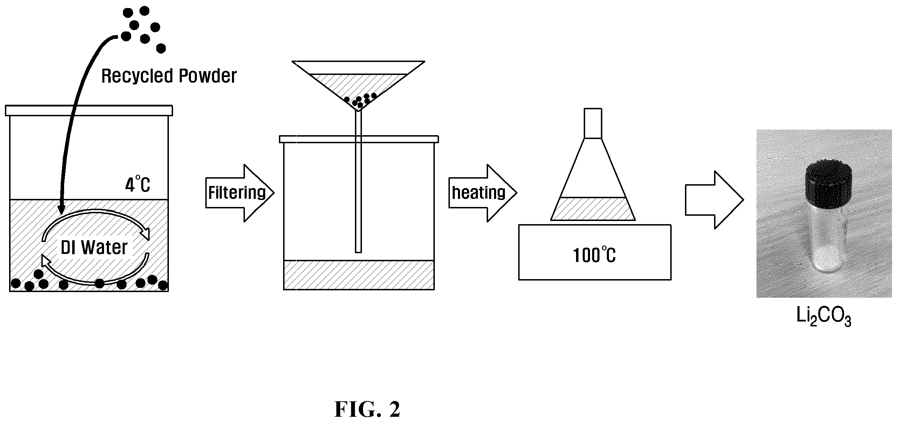

Fig. 2 is a schematic diagram explaining a method of obtaining pure lithium carbonate by dissolving a first powder obtained by completing pyrolysis according to the recycling method of a waste lithium ion secondary battery according to the invention, separating a lithium aqueous solution, and evaporating water from the lithium aqueous solution.

In addition, the recovery of lithium from the lithium aqueous solution may be performed by injecting an alkali such as sodium hydroxide and calcium hydroxide into an aqueous solution to increase the pH, and precipitating lithium ions included in the aqueous solution into a lithium hydroxide (LiOH) form.

Meanwhile, in the recycling method of a waste lithium ion secondary battery according to the invention, water may be injected together with the waste lithium ion secondary battery into the pyrolysis furnace in step (a). The water injected may react with a carbon component in the waste lithium ion secondary battery to produce a methane (CH₄) gas, and through this, the reduction of nickel or cobalt component included in the positive electrode material in the waste lithium ion battery may be performed more easily.

Sufficient effects can be obtained even the injection amount of water is small, and may be in a range of 1 to 10 parts by mass on the basis of 100 parts by mass of the weight of a positive electrode material included in the waste lithium ion secondary battery. If the amount is too small, it is difficult to obtain methane gas effects, and if the amount is too large, it is unpreferable, because the energy cost for pyrolysis increases.

In addition, in the recycling method of a waste lithium ion secondary battery according to the invention, heating for pyrolysis is possible at 400°C or less, and the energy cost for pyrolysis may also be saved. Heating for pyrolysis may also be 300°C or less, and 200°C or less.

After heating and initiating the self-heating, artificial heating of the pyrolysis furnace is stopped, and the self-heating reaction of the waste lithium ion secondary battery may be continued. The reaction may be continued for 10-24 hours. If the reaction time is too short, the probability of producing impurities may be high due to rapid reaction, and if the reaction time is too long, process productivity may be deteriorated, undesirably. The control of the reaction time may be performed through controlling the internal temperature, and the atmosphere in the pyrolysis furnace in steps (b) and (c).

After the self-heating, a pyrolysis reaction may be performed in an inert gas atmosphere, and nitrogen, helium or argon may be used as an inert gas.

Meanwhile, in the settled powder recovered in step (e), nickel, cobalt, manganese, aluminum, iron, or the like, which is a positive electrode raw material may be recovered, and by dissolving the settled powder in an acid such as sulfuric acid, hydrochloric acid and nitric acid, valuable metal components may be separated by a wet method. If a ternary positive electrode material (NCA, NCM, or the like) is applied in the waste lithium ion secondary battery, nickel, cobalt, manganese, and aluminum may be recovered, and if an iron phosphate positive electrode material (LFP) is used, iron may be recovered.

In the conventional method by which pyrolysis at a high temperature is performed, the valuable metal components included in the positive electrode material cannot be separated through water, but separated through a wet treatment via pulverization and using a strong acid. However, in the recycling method according to the invention, only valuable metal components of the positive electrode material may be simply separated through water. Accordingly, the settled powder according to the invention has a powder type, and does not include a metal ion other than the ions of Li, Ni, Co, Mn, Al and Fe, and since a wet treatment is not performed, an anion such as SO₄²⁻, F⁻, and Cl⁻ may not be included.

In the recycling method according to the invention, if the target positive electrode material of the waste lithium ion secondary battery is a ternary positive electrode material, the settled powder may particularly include metallic nickel and cobalt and may be a metal powder which is magnetic. Through a pyrolysis process at a low temperature, a thermal carbon reduction reaction may occur by a negative electrode material, a conductive material, or the like in the battery, and nickel and cobalt included in the positive electrode material may be reduced into a metal phase.

The metal powder may be magnetic, and the saturation magnetization value thereof may be 15 emu/g or more, more preferably, 30 emu/g or more.

The metallic Ni and Co, included in the high contents in the metal powder as the settled powder according to the invention are ferromagnetic substances, and have the high degrees of saturation magnetization values. Some remaining aluminum, manganese oxide, or the like without magnetism may play the role of reducing the saturation magnetization value. The metal powder according to the invention has the low contents of residues other than Ni and Co, and has a relatively high saturation magnetization value, preferably, 15 emu/g or more, more preferably, 30 emu/g or more. By using the magnetism, oxides included in the settled powder can be removed through magnetic separation, and only metal components may be further separated and selected.

In addition, the metal powder according to the invention may have an average particle size measured through a particle size analyzer using laser diffraction of 20 µm or less, and a standard deviation in particle size distribution may be 10 µm or less.

In the conventional pyrolysis process at a high temperature, the bulk of the resultant may be formed after processing due to a high temperature process, and a pulverizing process is inevitable for powdering. However, since the metal powder according to the invention is obtained through a pyrolysis process at a low temperature, a particle size may be small, and an additional pulverizing process is not required.

In addition, if the particle size of the metal powder for recycling the waste lithium ion secondary battery is reduced, the extraction of valuable metals through post-treatment may have a favorable aspect. Accordingly, the metal powder according to the invention preferably has an average particle size of 20 µm or less. In addition, the standard deviation in particle size distribution is 10 µm or less and uniform, and the treatment of the powder may be easy.

Meanwhile, the metallic Ni and Co included in the metal powder according to the invention are originated from Ni and Co included in the positive electrode material of a waste lithium ion secondary battery. Accordingly, the ratio thereof follows the composition of the positive electrode material of a waste lithium ion secondary battery before pyrolysis. The metal powder according to the invention has a very high recovery efficiency of Ni and Co from the waste lithium ion secondary battery, and the ratio of Ni and Co from the waste lithium ion secondary battery before pyrolysis may not show much difference from the ratio of Ni and Co from the metal powder after pyrolysis.

Accordingly, if the molar ratio of the metallic Ni to the metallic Co in the metal powder according to the invention (M_{Ni}/M_{Co}, M_{Ni} and M_{Co} are a mole fraction of the metallic Ni and a mole fraction of the metallic Co in a metal reduction powder, respectively) is a first molar ratio (M1), and if the molar ratio of Ni to Co in a positive electrode material of the waste lithium ion secondary battery before pyrolysis (m_{Ni}/m_{Co}, m_{Ni} and m_{Co} are a mole fraction of Ni and a mole fraction of Co in a positive electrode material of the waste lithium ion secondary battery, respectively) is a second molar ratio (M2), a difference between the first molar ratio and the second molar ratio may be 10% or less, more preferably, 5% or less of the second molar ratio.

In addition, in the metal powder according to the invention, since nickel and cobalt valuable metals are in a metallic state, they can be easily extracted only by the treatment with a weak acid compared to oxides. Accordingly, sulfides, nitrides or chlorides, including nickel or cobalt may be effectively obtained by extracting a metal reduction powder according to the present invention by a wet method. Such a metal compound may be utilized again as the raw material of a positive electrode material for a lithium ion secondary battery.

In addition, in the recycling method according to the invention, if the target positive electrode material of the waste lithium ion secondary battery is an iron phosphate-based positive electrode material, the settled powder may particularly be a metal powder including metallic iron or iron oxide. Like the ternary positive electrode material, the iron included in the positive electrode material may be included in the settled powder in a reduced metal phase or an iron oxide state, by a carbothermal reduction reaction through the pyrolysis at a low temperature.

Meanwhile, the floating material recovered in the recycling method according to the invention may be a carbon powder including graphite, or graphite and silica, having a low density as a negative electrode material. The carbon powder floating material may be captured and dried, and graphite or silicon which may be reused as a negative electrode material may be recovered.

The carbon powder may also have an average particle size measured through a particle size analyzer using laser diffraction of 20 µm or less, and a standard deviation in particle size distribution may be 10 µm or less.

### [Examples]

A waste lithium ion secondary battery in which a positive electrode was formed using a ternary (NCM) positive electrode material was treated according to the recycling method according to the invention to obtain a first powder. An undischarged waste lithium ion secondary battery was injected into a pyrolysis furnace, and a self-heating reaction of the waste lithium ion secondary battery was induced, while controlling the temperature of heat lines in the pyrolysis furnace to 300°C or less. After a self-heating reaction was initiated, the internal temperature was controlled so as to continue a pyrolysis reaction for 12 hours. After completing the reaction, a pulverized material was separated and recovered to obtain a first powder.

To water maintaining 4°C, the first powder obtained was injected and treated with ultrasonic waves. The solution thus treated was allowed to stand for a certain time to separate a settled powder and a floating material in the solution. Then, the settled powder, the lithium aqueous solution and the floating material were separated by filtering.

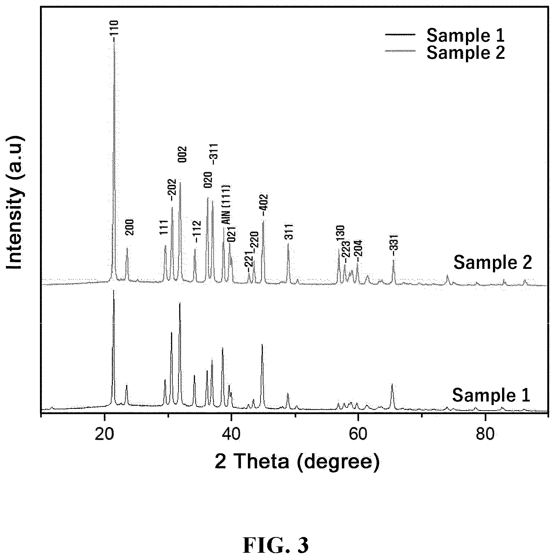

From the lithium aqueous solution thus obtained, water was removed by evaporation, and lithium carbonate was obtained. With respect to the lithium carbonate powder thus obtained, component analysis using X-ray diffraction analysis and inductively coupled plasma-optical emission spectroscopy (ICP-OES) were conducted. Fig. 3 shows X-ray diffraction analysis results, and it can be found that the lithium carbonate powders obtained through two experiments were all pure lithium carbonate, and impurities other than lithium were not found in ICP-OES results (see Table 1).

**[Table 1]**

| | Li | Ni | Co | Mn | Al |
|---|---|---|---|---|---|
| Sample 1 | 20.41 | Not detected | Not detected | Not detected | Not detected |
| Sample 2 | 18.34 | Not detected | Not detected | Not detected | Not detected |

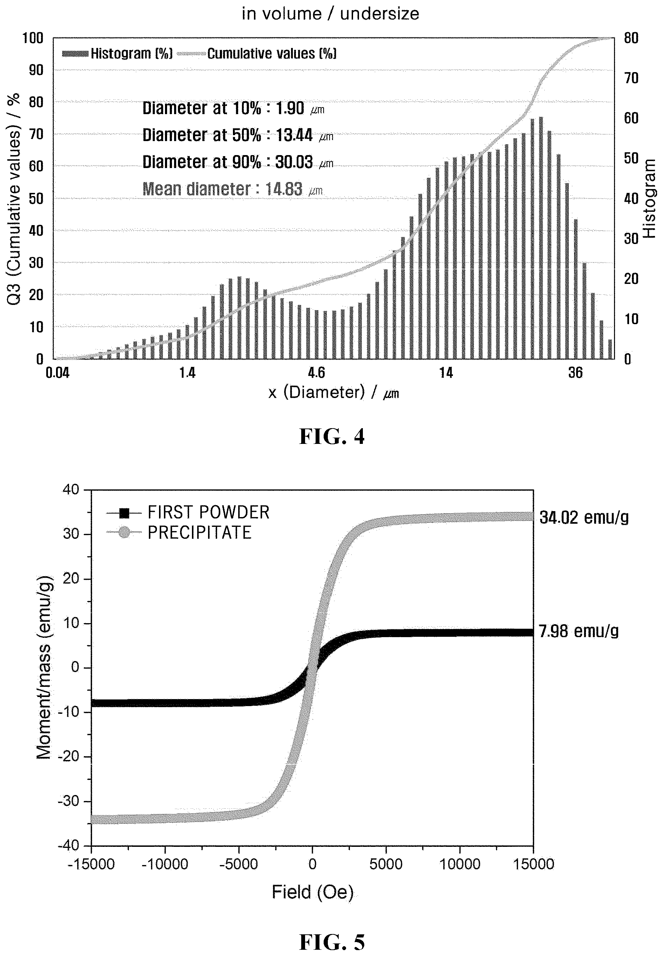

Fig. 4 shows measurement results on the particle size of a settled powder recovered. The settled metal powder was mostly spherical powder, and the average particle size of the metal powder was 14.8 µm, and the distribution thereof was not wide.

Fig. 5 is a graph showing measurement results of a saturation magnetization value on a first powder discharged after completing a reaction in a pyrolysis furnace, and a settled powder dissolved in and separated from water.

It can be found that the saturation magnetization value of the settled metal powder was significantly increased compared to a powder before dissolution. Compared to the first powder, in the settled powder, lithium carbonate, and graphite and silicon, which are negative electrode materials, are separated as a lithium aqueous solution and floating materials, respectively, and metallic Ni and metallic Co are included in the high contents, and thus, a high saturation magnetization value (34.02 emu/g) are shown.

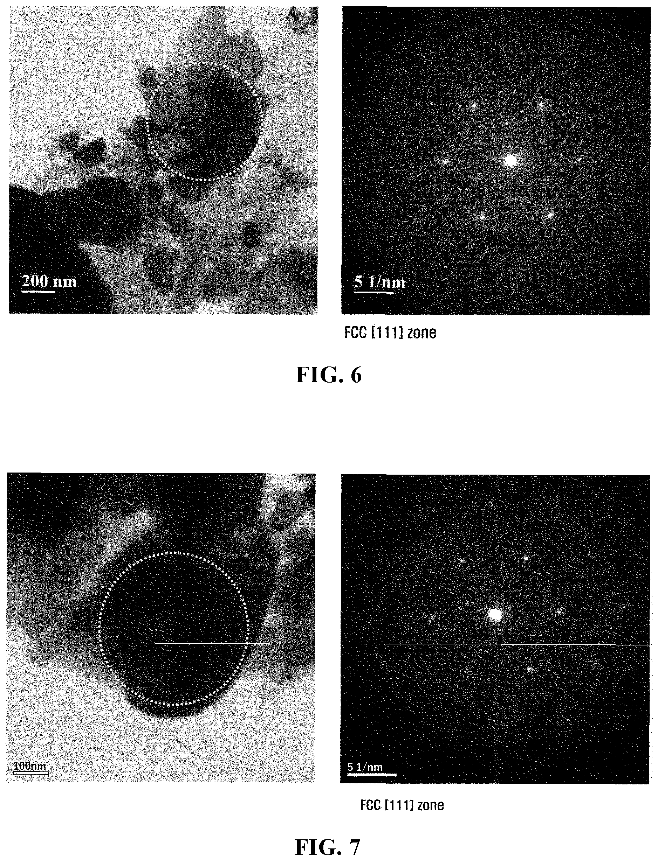

Fig. 6 and Fig. 7 show transmission electron microscopic images and diffraction pattern analysis results of the settled metal powder according to the invention. In the diffraction patterns, metallic Ni of a fcc structure can be confirmed.

## Claims

1. A recycling method of a waste lithium ion secondary battery, the method comprising:
(a) loading a waste lithium ion secondary battery into a pyrolysis furnace;
(b) increasing the internal temperature of the pyrolysis furnace to induce self-heating of the waste lithium ion secondary battery;
(c) maintaining a self-heating reaction of the waste lithium ion secondary battery;
(d) discharging a first powder formed after completing the self-heating reaction of the waste lithium ion secondary battery; and
(e) injecting the first powder into water, dissolving a lithium component included in the first powder, and separating and recovering a lithium aqueous solution, a powder settled in the lithium aqueous solution, and a floating material on the surface of the lithium aqueous solution, separately.

2. The recycling method of a waste lithium ion secondary battery according to Claim 1, wherein a temperature of the water for injecting the first powder in step (e) is 30°C or less.

3. The recycling method of a waste lithium ion secondary battery according to Claim 1 or 2, wherein microbubbles having 20 microns or less are injected into a slurry formed after injecting the first powder into the water in step (e).

4. The recycling method of a waste lithium ion secondary battery according to one of Claims 1 to 3, further comprising evaporating water in the lithium aqueous solution to recover lithium carbonate.

5. The recycling method of a waste lithium ion secondary battery according to one of Claims 1 to 4, further comprising injecting an alkali into the lithium aqueous solution to increase pH, and to precipitate and recover the lithium component as lithium hydroxide.

6. The recycling method of a waste lithium ion secondary battery according to one of Claims 1 to 5, further comprising injecting the settled powder into an acidic aqueous solution to recover a metal aqueous solution in which a metal component comprised in the settled powder is dissolved.

7. The recycling method of a waste lithium ion secondary battery according to one of Claims 1 to 6, wherein
the settled powder comprises metallic nickel and cobalt; and/or
the settled powder comprises metallic iron.

8. The recycling method of a waste lithium ion secondary battery according to one of Claims 1 to 7, wherein water is injected together into the pyrolysis furnace in step (a).

9. The recycling method of a waste lithium ion secondary battery according to Claim 9, wherein an injection amount of the water in step (a) is in a range of 1-10 parts by mass on the basis of 100 parts by mass of the weight of a positive electrode material comprised in the waste lithium ion secondary battery charged in the pyrolysis furnace.

10. The recycling method of a waste lithium ion secondary battery according to one of Claims 1 to 9, wherein
the waste lithium ion secondary battery in step (a) is in an undischarged state; and/or
the waste lithium ion secondary battery in step (a) is in an unpulverized state; and/or
the waste lithium ion secondary battery in step (a) comprises a waste lithium ion secondary battery disposed as a defect during a manufacturing process of a lithium ion secondary battery; and/or
wherein the waste lithium ion secondary battery in step (a) is disassemled and pulverized, and comprises the waste lithium ion secondary battery in a powder state.

11. The recycling method of a waste lithium ion secondary battery according to one of Claims 1 to 10, wherein the internal temperature in step (b) is 400°C or less.

12. A metal powder recovered from a waste lithium ion secondary battery, the powder being the settled powder recovered by the recycling method of a waste lithium ion secondary battery according to one of Claims 1 to 11, comprising metallic Ni and Co, and being magnetic, wherein a saturation magnetization value of the metal powder is 15 emu/g or more.

13. A carbon powder recovered from a waste lithium ion secondary battery, the powder being the floating material separated and recovered from the recycling method of a waste lithium ion secondary battery according to one of Claims 1 to 11, and comprising graphite, or graphite and silica.

14. The carbon powder recovered from a waste lithium ion secondary battery according to Claim 13, wherein an average particle size of the carbon powder measured through a particle size analyzer using laser diffraction is 20 µm or less, and a standard deviation in particle size distribution is 10 µm or less.

15. A waste lithium ion secondary battery recycled powder comprising lithium carbonate, metallic nickel and metallic cobalt, as the first powder formed through the recycling method of a waste lithium ion secondary battery according to one of Claims 1 to 11.
